# EUROPEAN PATENT SPECIFICATION

(11) **EP 2 628 047 B1**
(45) Date of publication and mention of the grant of the patent: **13.07.2016**
(21) Application number: 11771091.3
(22) Date of filing: 12.10.2011
(51) Int. Cl.: G11B 27/30, H04N 21/43, H04N 21/81, G11B 20/00, H04N 21/414, G03B 31/04, G10L 19/018

(54) **Alternative audio for smartphones in a movie theater.**
Alternativer Ton für Handy im Kino.
Piste son alternative dans l'ordiphone pour le cinéma.

(30) Priority: 12.10.2010 GB 201017174
(43) Date of publication of application: 21.08.2013
(73) Proprietor: Compass Interactive Limited, Wickhams Cay 1 (VG)
(72) Inventor: PADRO RONDON, Leyibet, London Greater London E14 9HR (GB); PADRO, Simon, London Greater London E14 9HR (GB)
(74) Representative: Boult Wade Tennant
(86) International application number: PCT/EP2011/067839
(87) International publication number: WO 2012/049223

(56) References cited:
- WO-A1-2011/140221
- US-A1- 2005 200 810
- US-A1- 2006 087 458
- US-A1- 2007 106 516
- Civolution: "Accurately synchronizing companion devices with TV programs Videosync - 2nd screen", INTERNET CITATION, 24 October 2008 (2008-10-24), pages 1-2, XP007920064, Retrieved from the Internet: URL:http://www.civolution.com/fileadmin/be standen/datasheets/VideoSync_-2 nd_screen.pdf [retrieved on 2012-01-10] cited in the application
- DOMINIC MILANO: "Content Control: Digital Watermarking and Fingerprinting", WHITE PAPER RHOZET,, [Online] 1 January 2004 (2004-01-01), - 1 February 2012 (2012-02-01), pages 1-11, XP007919850, www.rhozet.com Retrieved from the Internet: URL:http://www.rhozet.com/whitepapers/Fing erprinting_Watermarking.pdf> [retrieved on 2012-02-01] cited in the application

## Description

### Field of the Invention

The present invention relates to a system and method for providing alternative audio to combined video and audio and in particular to films and television shows.

### Background of the Invention

Films and TV shows comprise video and audio tracks. Typically, different versions of films and other content may be produced to be shown in different language environments and countries. Large budget films may be produced in ten or more different language versions, for instance. These different language versions mainly differ in their soundtrack, with substantially the same video component. However, this not always the case as some versions may be edited differently, producing slightly different length films, depending on culture and audience requirements.

Various techniques are used in generating these different language versions. For example, dubbing, i.e. substituting audio in a second language, and the use of subtitles may be used. In dubbing, the original speech may be replaced completely. Other non-speech soundtrack components may remain the same or be replaced as well. The use of subtitles has a disadvantage in placing a strain on a viewer, which may reduce the enjoyment of the production.

There are also systems that provide a form of subtitling and audio in other languages at live performance venues, such as theatres, but these systems may use proprietary hardware, which requires a significant investment by a performance venue and may generally only work within that particular venue.

In any case, particular language versions of a film or performance may not be enjoyed to the same extent by people who do not understand that particular language or who have a poor understanding of that language.

Providing different language versions of a film on separate screens in a cinema may not be viable if the audience for minority language versions is small. In any case, this approach may not satisfy a group of people who want to see a film together, where they have different first languages (for instance, a husband and wife who were born in different countries).

Therefore, there is required a system and method that overcomes these problems.

US 2005/0200810 describes a motion picture playback system providing two or more language soundtracks simultaneously. A time code reader reads time code signals recorded on the film and derives sync signals therefrom.

US 2006/0087458 describes an apparatus and method for synchronizing an audio signal with a film, wherein each film comprises imprinted time codes that are detected by a time code detector.

An article by Civolution entitled "Accurately synchronizing companion devices with TV programs" (http://www.civolution.com/fileadmin/bestanden/datasheets/VideoSync_- 2nd_screen.pdf) describes use of audio watermarking for synchronization of additional content on a second screen. The audio watermark can be used to trigger real-time events related to content watched on a first screen.

US 2007/0106516 describes a system for creating alternative audio via closed caption data. The apparatus receives an original audio and video file and an alternative audio file. The apparatus plays back both content by synchronizing markers in the alternative audio file to closed caption data segments in the original audio and video file.

WO 2011/140221 is a document which belongs to the state of the art under Article 54(3) EPC. Therefore, this document is not relevant to the assessment of inventive step. WO 2011/140221 describes a system and method of synchronising media streams such as an audio and video stream.

### Summary of the Invention

Against this background and in accordance with a first aspect there is provided a method of providing alternative audio for combined video and audio content according to claims 1 and 2.

In an example, the method comprises the steps of: determining a current playback position of the combined video and audio content, synchronising the alternative audio with the determined current playback position, and playing the alternative audio synchronised with the current playback position. Alternative audio is played back to a viewer of content. This alternative audio replaces the original audio, which is otherwise heard by other viewers. The alternative audio is synchronised with the content to the current position, point or time of the content being shown. Therefore, viewers who may not enjoy content such as film or TV shows in the original or projected language may enjoy the showing with other users who prefer the original language. The alternative audio is provided during playback of the combined video and audio content (original audio). The alternative audio is provided whilst the original audio is playing, i.e. simultaneously. The alternative audio may be played selectively to individual viewers, whilst other viewers listen to the original audio. The current playback position may be the point in time (current or present playback time) of the combined video and audio content, a frame number or other indicator of the current point of the content being shown or displayed at that moment. This is useful as it may not be possible to interrupt a performance whilst the alternative audio is synchronised. Also, it does not require playback of alternative audio to start at the same time as the combined video and audio content or film.

The determining step further comprises: receiving a signal associated with the combined video and audio; and
analysing the received audio signal to determine the current playback position of the combined video and audio content. This allows automation of the synchronisation steps. The signal may be sent along with the combined video and audio content or be part of the content (either in video or audio form). For example, association may involve sending the signal during playback of the content and in time or synchronisation with it. This synchronisation may be entirely separate from the synchronisation of the alternative audio. This signal may be transmitted by the same device (or linked to it) that shows the content (e.g. the projector apparatus). Where the signal is part of the content (i.e. its audio component) then no additional signal generator may be required.

Optionally, the signal may be selected from the group consisting of audio, optical, laser, wireless, WiFi, Bluetooth and infrared. Where an audio signal is used this may be received by a microphone. This may be an internal or external microphone.

In one example, the received signal may contain a position code and the analysing step comprises determining the current playback position from the position code. The position code may be a time code, an actual time for the combined video and audio or a lookup code or identifier used to determine the actual position or time.

Optionally, the receiving, analysing and synchronising steps may be repeated at intervals or continuously. This may be used to maintain synchronisation. For example, this may be done every minute, every 30 seconds or every 10 seconds.

The position code may be encoded in the audio signal as an audio watermark. An audio watermark may be an additional signal added to the audio signal that is usually imperceptible by listeners but extractable by electronic devices.

In another example, analysing the received audio signal to determine the current playback position of the combined video and audio content may further comprise obtaining signal characteristics of the audio signal and comparing the obtained signal characteristics with a database of signal characteristics and corresponding playback times. This may be used instead of the watermarking technique and without requiring original audio to be encoded with extra information.

Preferably, the signal characteristics may be any one or more selected from the group consisting of: amplitude, frequency, zero crossing rate, tempo, spectral flatness, and bandwidth. Other signal characteristics may be used.

Preferably, the signal characteristics may be audio fingerprints.

Optionally, the determining step may further comprise receiving a user input indicating the current playback position. This may be used when automatic synchronisation is not available or possible.

Preferably, the user input may be a forward or reverse signal. This may be invoked by the user interacting with a user interface such as a touch screen or physical switches.

Optionally, the method may further comprise the step of applying a manual time shift to the alternative audio. This may be large or small (+/- minutes, seconds or 0.1 seconds), for example.

Preferably, the alternative audio may be stored within a playback device. This allows the method to operate where a network signal is unavailable or weak.

Optionally, the alternative audio may be streamed across a network. The stream may also be buffered.

Preferably, the alternative audio may be played through headphones. The headphones may be noise cancelling to reduce the sound level of the audio component of the combined video and audio content (i.e. original audio).

Preferably, the method according to any previous claim may further comprise identifying a plurality of available alternative audio to be played based on the received audio signal. A selection may be presented to a user on request.

Advantageously, the method may further comprise the step of uncompressing the alternative audio. The use of compressed alternative audio may allow bandwidth to be saved when sending the alternative audio to a mobile device for playback.

The method may further comprise the step of decrypting the alternative audio. Encryption of the alternative audio may increase security and reduce unauthorised copying and distribution.

Optionally, the method may further comprise receiving at a message inbox one or more messages providing information regarding available alternative audio.

Optionally, the method may further comprise providing information regarding the alternative audio to a social network. These networks may include Facebook (RTM), Google+ (RTM), etc.

Optionally, the method may further comprise offsetting a playback position of the alternative audio relative to the current playback position.

Optionally, the method may further comprise the step of altering the offset.

Optionally, the method may further comprise measuring a change in the offset from a required offset and performing the synchronising step if she measured change is greater than a predetermined amount.

According to a second aspect, there is provided apparatus for providing alternative audio for combined video and audio content according to claims 7 and 8. In an example, the apparatus comprises: a processor configured to: determine a current playback position of the combined video and audio content, and synchronise the alternative audio with the determined current playback position, and an audio generator arranged to play the alternative audio synchronised with the current playback position.

The apparatus may further comprise a signal receiver configured to receive a signal associated with the combined video and audio content and wherein the processor is further configured to analyse the received audio signal to determine the current playback position of the combined video and audio content. In the case of an audio signal the association may be the original audio.

Optionally, the received signal may be selected from the group consisting of audio, optical, laser, wireless, WiFi, Bluetooth and infrared. Therefore, the apparatus may further comprise a microphone, optical sensor, camera or wireless receiver configured to receive the signal.

In one example, the processor may be further configured to extract a position code from the received signal in order to determine the current playback position. The received signal may be an audio signal.

The received signal may be an audio signal and the processor may be further configured to extract the position code from an audio watermark within the audio signal. An audio watermark is a further signal added to the audio stream to provide computer readable data to a receiving device.

In another example, the received signal may be an audio signal and the processor may be configured to analyse the received audio signal by obtaining signal characteristics of the audio signal and comparing the obtained signal characteristics with a database of signal characteristics and corresponding playback times. This may be done instead of using audio watermarking or other techniques.

Preferably, the apparatus may further comprise headphones in electrical communication with the audio generator.

Optionally, the apparatus may further comprise a display screen configured to dim when the alternative audio is played. This dimming may reduce distraction for other viewers.

Optionally, the apparatus may further comprise an interface arranged to connect the audio generator with an external audio amplifier. This may be used to facilitate presentation of the alternative audio to multiple viewers. For example, this may be used to provide alternative audio to television viewers. Where the audio signal from the combined audio and video content (the original audio) is used in the synchronisation process (i.e. watermarking, fingerprinting or other methods) the sound of the original audio may be reduced to a level receivable by the apparatus but low enough for alternative audio to be heard by the viewers.

In an example, there is provided a server. The server comprises: a database of alterative audio; and a processor configured to receive a request for the alternative audio to the apparatus described above. The database and processor may be within the same device or electrically connected but physically separate. The request may be received and responded to over a network and preferably, a wireless network. The database may be a relational database, a file system, and/or a memory system. The format of the alternative audio files may be AAC, DTS, MPEG-1, AIFF, WAV, WMP, WMA and MP3 for example.

In another example, there is provided a system. The system comprises the apparatus and server described above.

The method described above may be implemented as a computer program comprising program instructions to operate a computer. The computer program may be stored on a computer-readable medium or transmitted as a signal.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of a system for providing alternative audio including a handheld device, given by way of example only;
FIG. 2 shows a flowchart of a method for providing alternative audio, given by way of example only;
FIG. 3 shows a schematic diagram of the mobile device of FIG. 1;
FIG. 4 shows a flowchart of a further method for providing alternative audio;
FIG. 5 shows a flowchart of yet a further method for providing alternative audio;
FIG. 6 shows a screenshot of the device of FIG. 1 for providing alternative audio to combined video and audio, given by way of example only;
FIG. 7 shows a further screenshot of the device of FIG. 1, including options for viewing alternative audio;
FIG. 8 shows a further screenshot of the device of FIG. 1, including an option to pay for particular alternative audio;
FIG. 9 shows a further screenshot of the device of FIG. 1, including a button to start a method for providing alternative audio;
FIG. 10 shows a further screenshot of the device of FIG. 1, indicating a listening phase;
FIG. 11 shows a further screenshot of the device of FIG. 1, indicating a synchronisation mode;
FIG. 12 shows a further screenshot of the device of FIG. 1, including a launch icon;
FIG. 13 shows a further screenshot of the device of FIG. 1, showing a manual adjustment screen;
FIG. 14 shows a further screenshot of the device of FIG. 1 including an options selection screen;
FIG. 15 shows a further schematic diagram of a system for providing alternative audio including a handheld device, given by way of example only;
FIG. 16 shows a further flowchart of a method for providing alternative audio;
FIG. 17 shows a further flowchart of a method for providing alternative audio;
FIG. 18 shows a further screenshot of the device of FIG. 1;
FIG. 19a shows a further screenshot of the device of FIG. 1; and
FIG. 19b shows a further screenshot of the device of FIG. 1.

It should be noted that the figures are illustrated for simplicity and are not necessarily drawn to scale.

### Detailed description of the preferred embodiments

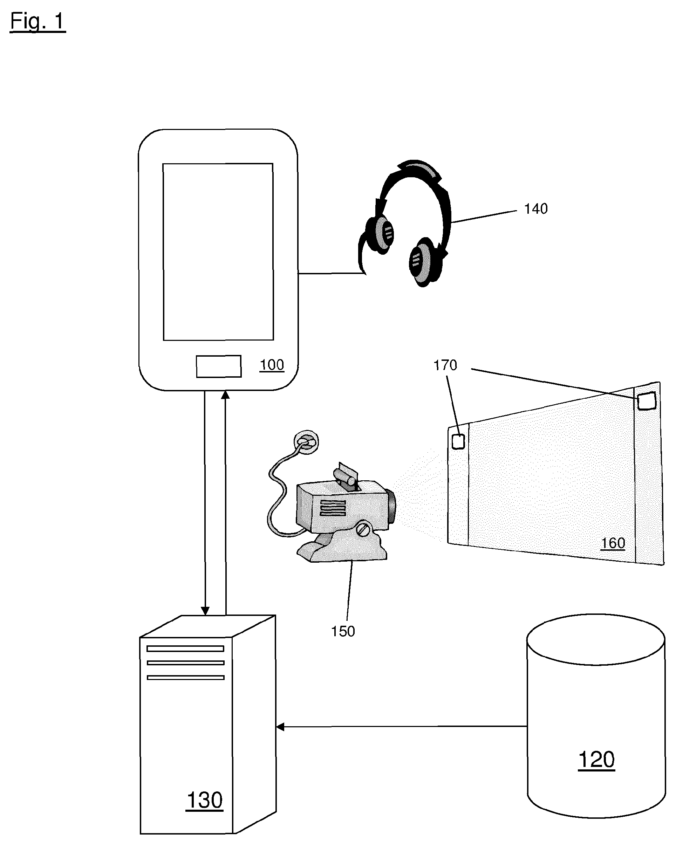

Figure 1 shows a schematic diagram illustrating components of a system for providing alternative audio to combined audio and video such as a film (movie) or TV show. In this example, the combined audio and video is in the form of a projected film in a cinema environment. The film is projected by projector 150 onto screen 160 with original audio emitted by speakers 170. A mobile device 100, which in the present example is a smart phone with processor facilities, may be operated by a user. Audio output from the mobile device 100 may be provided by an integrated audio generator with audio output preferably provided to the user by headphones 140. The headphones 140 may preferably be designed to reduce or cancel ambient sound such as the original audio content otherwise heard from the speakers 170. The mobile device 100 may be for example, an iPhone (RTM) running an operating system such as iOS provided by Apple, Inc. A computer program operating on the mobile device 100 may be provided by a download service such as iTunes (RTM) and the computer program may be in the form of a mobile application or app. The mobile app determines a current playback position or time of the video and audio content displayed on the screen 160 and generated by speakers 170. The original audio may be synchronised with the video content within the projection system in the usual way. The projection system may include a single language or soundtrack version of the displayed film.

Database 120 may store sets of alternative audio corresponding to different films or combined audio and video content. A server 130 may provide the alternative audio to mobile devices 100 on request. Such requests and downloads may be issued by the mobile app operating on the mobile device 100 and be provided by a network such as the Internet preferably over a mobile cell phone network operating a protocol such as 3GPP, HSPA+, EDGE, CDMA200, and 4G technologies. WiFi or WiMAX or a wired network connection (e.g. Ethernet or USB) may also be used.

The server 130 and database 120 may be located in different locations or within the same location. They may also be located away from the cinema or cinemas showing the film. No direct communication between the projection system and the mobile device 100 or server 130 is necessary. The alternative audio may be downloaded in full onto the mobile device 100 in advance, or just before the film begins. In some circumstances, the alternative audio may be streamed in real time or near real time to the mobile device 100 as required. If the alternative audio is not in synchronisation with the displayed video content, then the mobile app may determine the current playback position of the combined video and audio content (film), synchronise the alternative audio (i.e. move or start it from the same position) with the determined current playback position and then play the alternative audio through the headphones 140 to the user. In this way, other viewers in the cinema without such a mobile device may view the audio and original audio content whilst the user with the mobile device may view the video content together with the alternative audio correctly synchronised.

At intervals or continuously, the mobile app running on the mobile device may check for synchronisation and resynchronise the video content with the alternative audio as necessary. This may be a manually initiated or automatic process.

There may be many independently operating mobile devices 100 or different types, projectors 150 operating in different cinemas or buildings and one or more servers 130 and/or databases 130. Each server 130 may operate a suitable operating system such as UNIX, Windows (RTM), OSX (RTM), etc. Each database 120 may include suitable database software such as Oracle (RTM), MySQL, SQLServer (RTM), DB2 (RTM), etc. Each device may provide any one of the available alternative audio tracks.

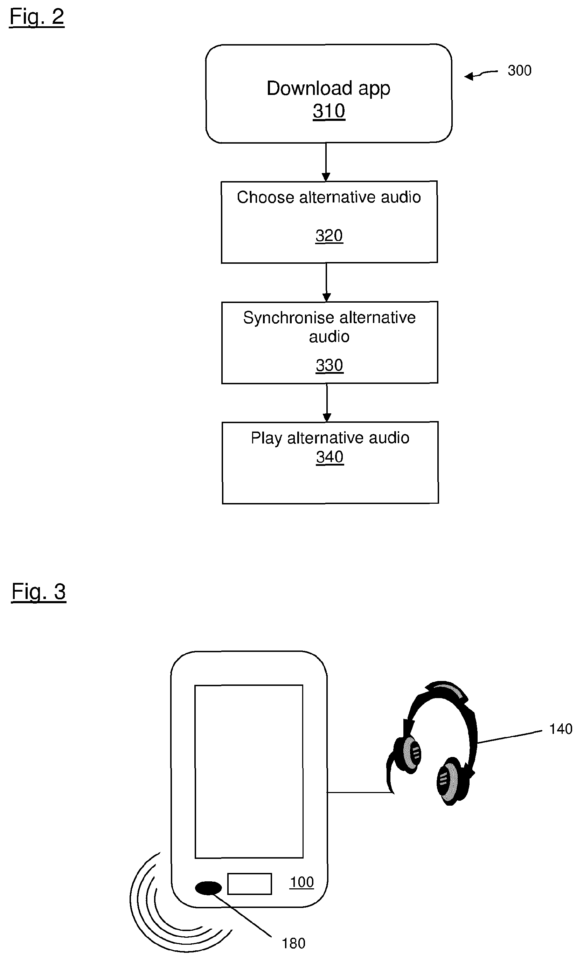

Figure 2 shows a flowchart of a method 300 for providing alternative audio to combined audio and video content. As described with reference to figure 1, step 310 requires the mobile app to be downloaded to the mobile device 100. This may only be required once for the particular mobile device 100. Further operation of the method 300 may use the previously downloaded version of the mobile app (or it may be updated if a newer version becomes available). The user may then choose alternative audio at step 320, corresponding with the particular film that they wish to view. The mobile app may then synchronise this alternative audio with the film at step 330 and the alternative audio is played to the user through the headphones 140 at step 340, synchronised with the video or film.

In one embodiment, the mobile device 100 may further comprise a microphone 180 as shown in figure 3. This microphone may be used to detect an audio signal of the original audio content of the combined audio and video content or film. In this embodiment, the mobile app running on the mobile device 100 may use this received audio signal to determine the current playback position of the combined video and audio content in order to synchronise the alternative audio with the current playback position.

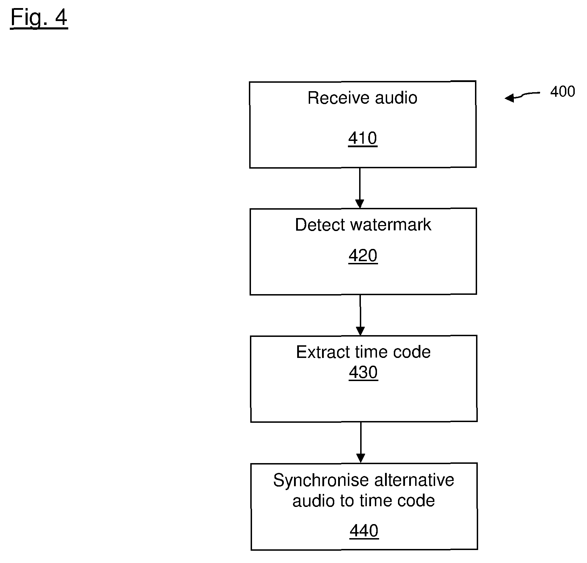

There are several different techniques that may be used to provide the synchronisation of step 330. Figure 4 shows a flowchart indicating one method of providing such synchronisation. In this method 400, the original audio or soundtrack of the combined video and audio content is provided with an audio watermark. Watermarking techniques are described in detail in the following two documents:
1. "Content Control: Digital Watermarking and Fingerprinting" Dominic Milano (http://www.rhozet.com/whitepapers/Fingerprinting_Watermarki ng.pdf)
2. "Accurately synchronizing companion devices with TV programs VideoSync - 2nd Screen" (http://www.civolution.com/fileadmin/bestanden/datasheets/Vi deoSync_-2nd_screen.pdf)

The audio watermark is provided with position or time code information that may be used to determine the current playback position of the film. These audio watermarks may be embedded 420 at regular intervals, which may be every few seconds or at greater rates in the content. The audio watermark may directly include a time code, current playback position and/or provide a unique identifier of the time code or current playback position. In any case, the audio watermark may provide a unique indication of the current playback position detectable by the mobile device. The audio watermark may be provided during post-production of the film before distribution to cinemas. The audio watermark may be imperceptible to viewers but detectable by the mobile device 100.

At step 410 shown in figure 4, an audio signal is received by the microphone 180 of the mobile device 100. This audio signal originates from the audio component or track of the film. At step 420, the audio watermarks may be detected and processed by the mobile app. At step 430, a position, position code, time code or a time code identifier may be extracted from the audio watermark. At step 440, the alternative audio may be synchronised with the position or time code indicating the current playback position.

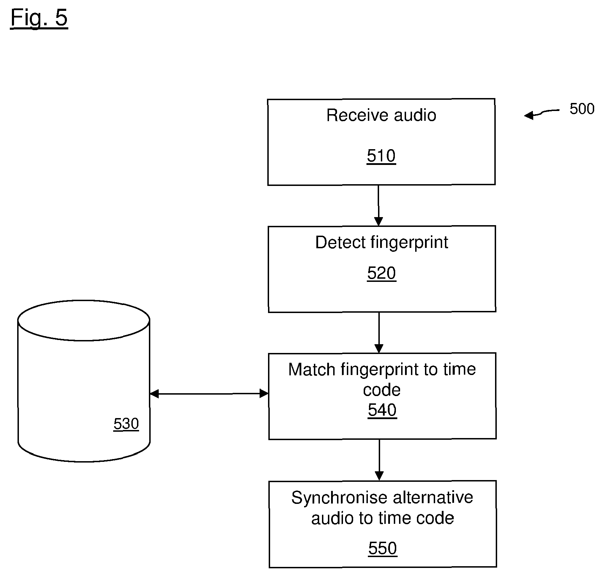

Figure 5 shows an alternative method for synchronising the alternative audio with the current playback position of the film. This alternative method is based on audio fingerprints instead of audio watermarks as described with reference to figure 4. The references (1 and 2) mentioned above also describes the concept and use of audio fingerprints. In summary, any audio signal will have particular signal characteristics that may be sampled or detected. These audio signal characteristics may be compared with a database of signal characteristics relating to particular known content. Therefore, matches may be made based on audio fingerprint techniques.

The method 500 shown in figure 5 also starts with the mobile device 100 receiving the audio signal using its microphone 180 in common with method 400. However, at step 520 the mobile app detects one or more audio fingerprints within the audio signal. In other words, the method analyses the received audio signal and determines particular characteristics of the signal forming the fingerprint. A database 530 either local to the mobile device 100 or remote from it, which may be connected by a network, stores a collection of audio fingerprints. The fingerprint detected at step 520 may be compared with audio fingerprints stored in database 530 (in a suitable electronic form). The stored fingerprints may be associated with particular films or combined video and audio content using a content identifier. Each fingerprint may also be associated with a particular location with the film, a time code, position code and/or a current playback position, using a time code id or actual time. The particular audio fingerprint detected by the mobile device 100 may be matched with one in the database 530. During matching step 540 such a match may be made identifying the particular corresponding current playback position. The alternative audio (pre-stored or streamed) may then skip to the same current playback position in order to synchronise it with the film (step 550).

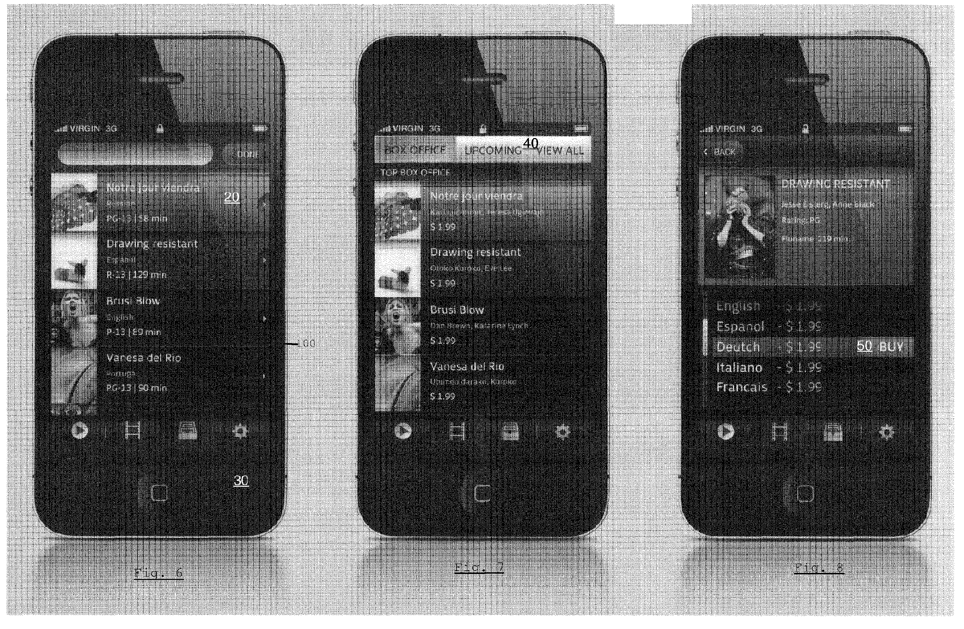

Figures 6 to 14 show example screen shots of the mobile app operating on the mobile device 100. Different screens may be shown and other variants may be used.

Figure 6 indicates that the mobile device 100 is connected over a mobile 3G network. The mobile device 100 has a screen 20, which in this example is a touch screen. Option buttons 30 are shown at the bottom of the screen and may be used to operate the mobile app. These option buttons 30 may commence playback of the alternative audio, load a selection screen, launch a user account screen or set other options and settings.

Figure 7 shows a further screen shot including browsing buttons 40 that may provide an indication of what alternative audio files are available, those that will be available soon and a view of all such content.

Figure 8 shows a screenshot of functionality used to purchase or receive particular alternative audio in one or several available languages. In this screenshot, a buy selection button 50 is shown and may be used to choose the particular language version for a film.

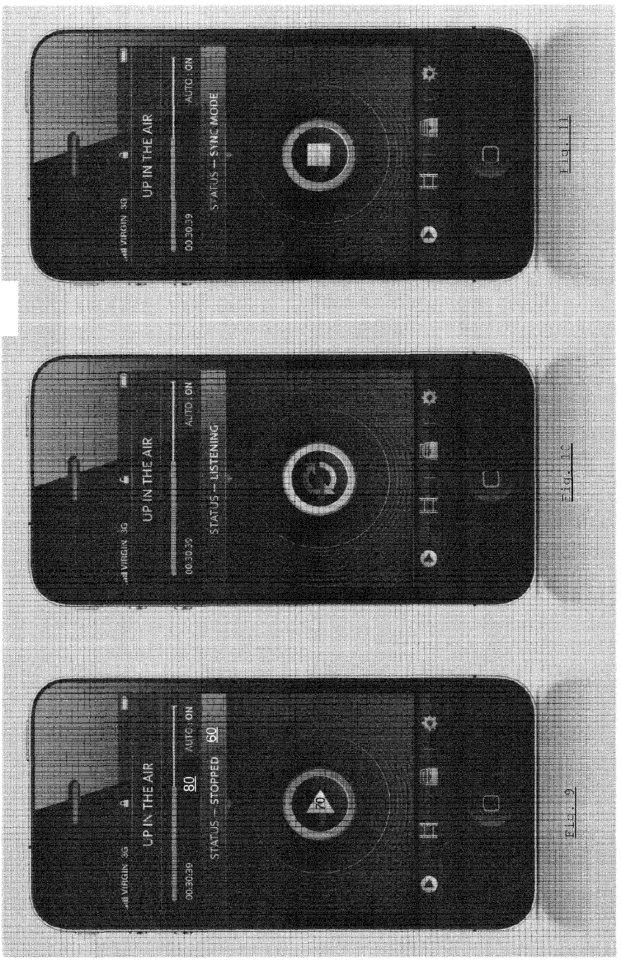

Figures 9, 10 and 11 show screenshots of the mobile app operating the methods described with reference to figures 4 and 5 in particular and figure 2 in general. Figure 9 displays a particular combined video and audio content (film), an indication of the current playback position 80, the status of the method and a control button 70 used to control various functions of the mobile app. In this particular screenshot, the mobile app has stopped playback of the alternative audio partway through.

Figure 10 shows a screenshot during operation of the mobile app whilst the mobile device 100 is receiving audio and determining the current playback position (corresponding approximately with steps 410-430 and 510-540 of method 400 or 500).

Figure 11 indicates that synchronisation has taken place (steps 540 and 550) so that the alternative audio is synchronised with the current playback position of the combined video and audio content.

Figure 7 shows a general icon launch screen for the mobile app.

The synchronisation may be achieved instead of or as well as the previously described techniques by the user fast forwarding, reversing or skipping through the alternative audio at various different speeds until the current playback position of the video component of the film matches the alternative audio provide by the mobile device 100. An interface may include playback controls such as stop, play, forward, rewind and pause. Forward and reverse micro-time shift synchronisation controls may be provided to cue and synchronise with higher accuracy and resolution (e.g. +/-0.25 - 10 seconds).

The default play mode may be auto sync in which the mobile app automatically synchronizes between the audio the screen and playback audio (the alternative audio). Auto sync may be achieved by using embedded technology to listen to the screened audio via the device's microphone 180 as described in the example embodiments above. However, in circumstances where no audio feedback is available (such as when watching a film on an aircraft) the mobile app may offer a manual sync option which allows for a movie preferably to be synchronized in under 30 seconds.

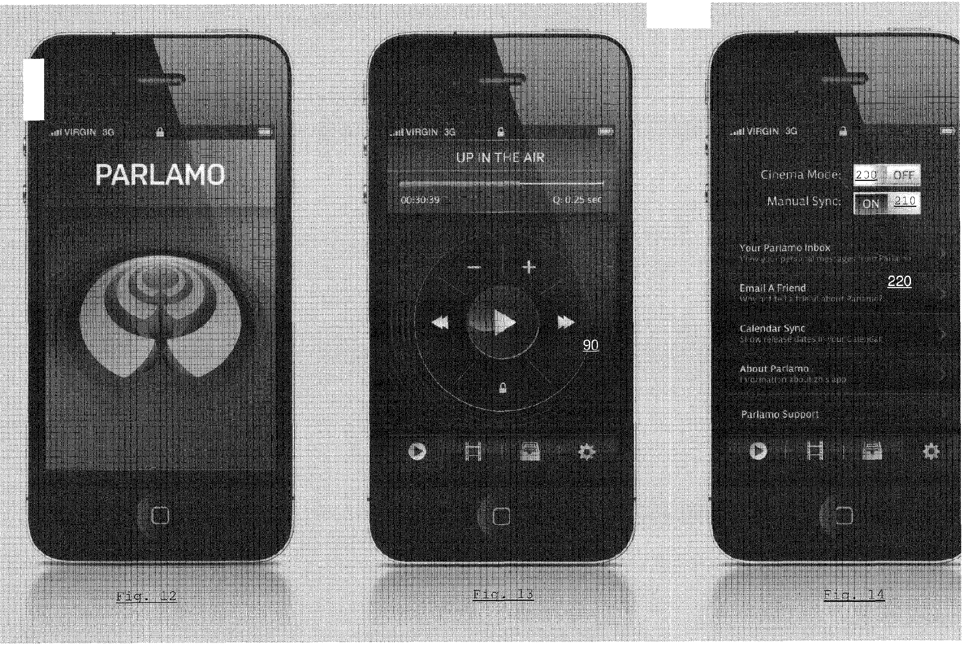

Figure 13 shows a screenshot of the mobile app for providing manual synchronisation by the user fast forward or reversing, or otherwise moving through the playback of the alternative audio. Playback buttons 90 may be used to achieve this control.

Figure 14 shows a screenshot of an options page in the mobile app. A cinema mode indicates where automatic synchronisation may be achieved (button 200). In other words, this mode launches either the watermarking method 400 or the fingerprinting method 500 in order to synchronise the alternative audio with the current playback position. Manual synch using playback buttons 90 may be accessed using manual synch button 210. Other options 220 that may be executed include emailing recommendations to friends, obtaining support or viewing incoming emails relating to alternative audio that may be provided.

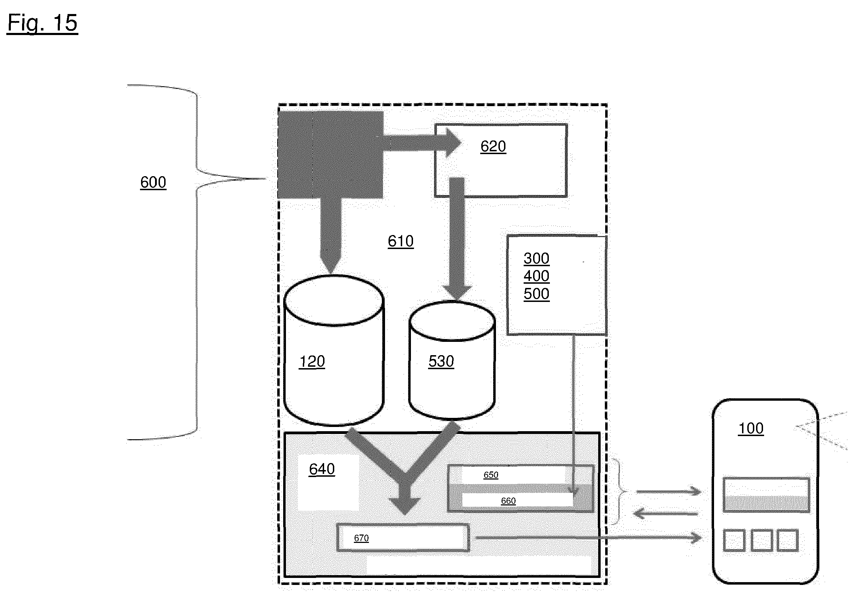

Figure 15 shows a further schematic diagram the system for providing alternative audio illustrating different features in more detail. This system may use the audio watermarking or the audio fingerprinting techniques described above.

A source of alternative audio content 600 is shown. This may be directly from content producers such as film studios, for example. Component 610 processes the alternative audio and stores it in database 120 in a format suitable for sending to the mobile device 100. Process 620 generates the audio watermark or analyses the alternative audio to generate audio fingerprints. The audio watermarks or fingerprints are stored in database 530.

Component 640 handles deployment of the mobile app 650 to the mobile device 100. The mobile app 650 contains program code and algorithms 660 for carrying out the described methods (either 300, 400 or 500). This component 640 also delivers the alternative audio together with data (e.g. the audio watermarks or fingerprint lookup tables) to the mobile app 650 so that synchronisation may be achieved.

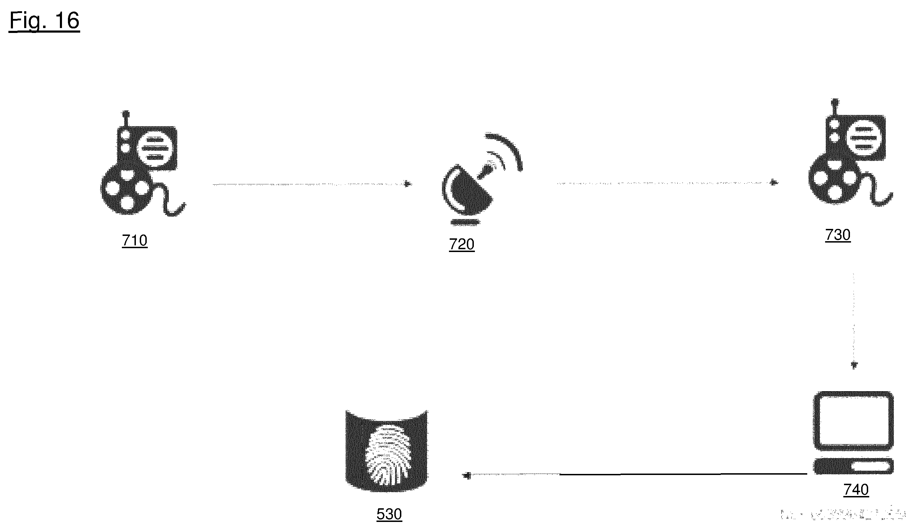

Figure 16 shows a flowchart of the fingerprinting embodiment 500. This flowchart illustrates other aspects of this method. However, figure 16 does not show all aspects of this method for clarity. Media content 710 is provided. This is the combined video and audio content. The media content may be distributed to cinemas and other content outlets using a distributor 720 resulting in distributed media 730. A fingerprint identifier 740 analyses the distributed media 730 to generate a series of audio fingerprints. This may use signal characteristics. These characteristics or fingerprints may be encoded to a numeric form, for example. The audio fingerprints may be stored in database 530 along with a particular playback position of the content.

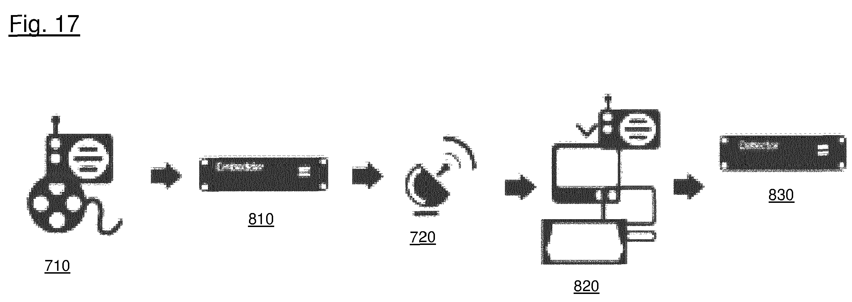

Figure 17 shows a flowchart of the watermarking embodiment 400. This flowchart illustrates other aspects of this method. However, figure 17 does not show all aspects of this method for clarity. Media content 710 is again provided. Watermarker 810 adds the audio watermarks to the media content 710. The media content with added watermarks is disturbed by distributor 720 to content outlets 820 such as cinemas, TV broadcasters, theatres, etc. A watermark detector 830 may detect the audio watermarks as part of the synchronisation step 330.

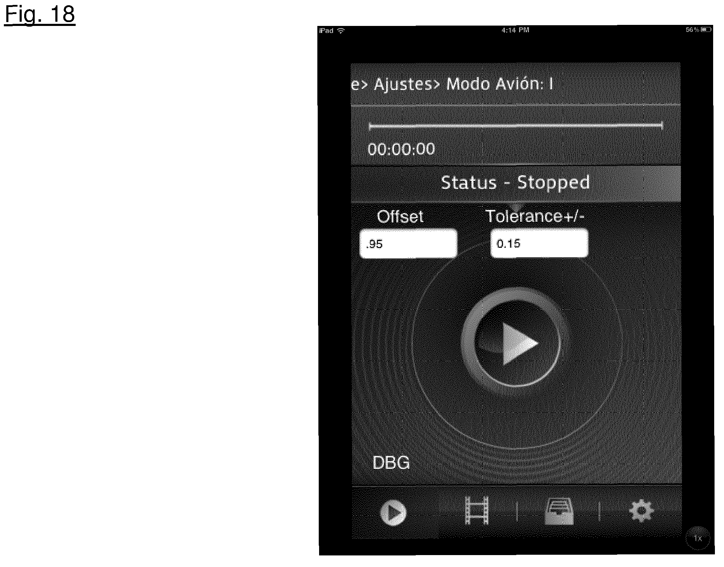

Figure 18 shows a further example screen shot of the mobile app 650. This screen shot illustrates a further method of ensuring or tuning to correct synchronisation. This further step may be used in conjunction with other synchronisation techniques such as those described above. In this further synchronisation, a time offset (in seconds) may be applied to the alternative audio following precise synchronisation with the combined audio and video content (using any of the described methods). In other words, a predetermined or adjustable shift (either ahead or behind) may be applied to the alternative audio relative to the current playback position. This may assist with overcoming external timing influences that may be present in the cinema or where different mobile devices 100 have differing processing powers resulting in playback delays or differences. A tolerance may be defined (again, either predetermined or adjustable) that specifies the amount by which the offset can change before synchronisation is repeated. This may avoid synchronisation from occurring too often and disturbing the viewer. The tolerance may be defined +/- in seconds, for example.

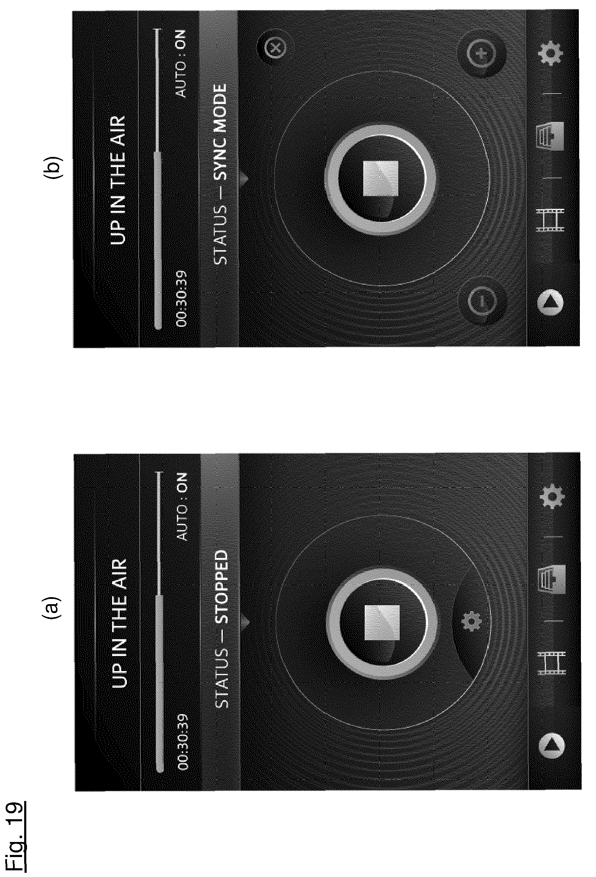

Figures 19 (a) and (b) show further screen shots illustrating the automated synchronisation procedure when the offset tolerance is breached.

This offset and/or tolerance data may be written into a database record for each movie soundtrack or alternative audio within a content management system. Different values may be used for each device type, which the mobile app may pull in together with the alternative audio. This may then be set by identifying the type and model of mobile device 100, for example.

As will be appreciated by the skilled person, details of the above embodiment may be varied without departing from the scope of the present invention, as defined by the appended claims.

For example, a database similar to audio fingerprint database 530 may be used with the audio watermark embodiment. In this case the audio watermark may not contain a particular position or time code or current playback position but a searchable reference to the time or position. This searchable reference may be stored within the database together with the particular playback time or time code.

Other mobile devices may operate the mobile app. These include Android (RTM) devices, iPod Touch (RTM) and iPad (RTM).

Downloaded tracks or alternative audio may be individually encrypted to AES-256 standard (for example), which prevents copying and playback on any other device.

Features in the Settings area of the mobile app may provide a Cinema Mode option which dims the mobile device's screen to a darkest or a darker level than normally available compared to a phone's minimum dim setting (so as not to disturb other cinemagoers).

The mobile app may include its own integrated messaging inbox to which multi-media messages can be broadcast to all users and unlike push messages, may be stored for retrieval at the users' convenience. This messaging facility may provide other parties to send rich media messages on new releases, trailers, promotions, etc. The mobile app may also includes social network functionality to allow users to share their experiences via Facebook, Google+, Twitter, etc, for example.

The mobile app's interface may be available in a number of different languages based on the mobile device's internal language settings. Language settings may also reflect when delivering movie information, e.g. if a user has chosen French as the phone's default language, the mobile app controls may appear in French along with the movie title and synopsis in French (if available).

Rather than the user identifying the particular film or combined video and audio content, this may be identified (during playback of the performance) automatically from embedded audio watermarks or audio fingerprinting techniques and associated lookups. The user may then only need to choose a particular language version.

Typical file sizes for the alternative audio may be approximately 100-200 MB.

A microphone has been shown as a signal receiver used to receive a signal associated with the combined video and audio. In this example the signal was the audio signal itself. Alternatively, the received signal may be in the form of light (e.g. infrared, visible, laser, etc.) The received signal may also be wireless (e.g. WiFi or Bluetooth). An appropriate signal receiver may be incorporated into the mobile device for use with these other signal sources.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method of providing an alternative audio corresponding to a combined video and audio content, the method comprising the steps of:
receiving (410) an audio signal associated with the combined video and audio content, the audio signal received by a microphone (180) of a device (100), wherein a position code is embedded in the received audio signal as an audio watermark;
analysing (430), by the device, the received audio signal to determine a current playback position of the combined video and audio content from the position code;
decrypting, by the device, the alternative audio;
synchronising (440), by the device, the alternative audio with the determined current playback position; and
playing, by the device, the alternative audio synchronised with the current playback position.

2. A method of providing an alternative audio corresponding to a combined video and audio content, the method comprising the steps of:
receiving (510) an audio signal associated with the combined video and audio content, the audio signal received by a microphone (180) of a device (100);
analysing, by the device, the received audio signal to determine a current playback position of the combined video and audio content by obtaining signal characteristics of the received signal (520) and comparing the obtained signal characteristics with a database of signal characteristics and corresponding playback times (540), wherein the signal characteristics are audio fingerprints;
decrypting, by the device, the alternative audio;
synchronising (550), by the device, the alternative audio with the determined current playback position; and
playing, by the device, the alternative audio synchronised with the current playback position.

3. The method according to claim 1 or claim 2, wherein the receiving (410, 510), analysing (430, 520) and synchronising (440, 550) steps are repeated at intervals or continuously.

4. The method according to any previous claim, wherein the alternative audio is stored within the device (100).

5. The method according to any previous claim, wherein the alternative audio is streamed to the device across a network.

6. The method according to any previous claim further comprising identifying a plurality of available alternative audio to be played based on the received audio signal.

7. Apparatus (100) for providing to a user of the apparatus an alternative audio corresponding to a combined video and audio content, the apparatus comprising:
a microphone (180) configured to receive an audio signal associated with the combined video and audio content;
a processor configured to:
analyse the received audio signal to extract a position code embedded in the received audio signal as an audio watermark so as to determine a current playback position of the combined video and audio content, and
decrypt the alternative audio;
synchronise the alternative audio with the determined current playback position; and
an audio generator arranged to play the alternative audio synchronised with the current playback position.

8. Apparatus (100) for providing to a user of the apparatus an alternative audio corresponding to a combined video and audio content, the apparatus comprising:
a microphone (180) configured to receive an audio signal associated with the combined video and audio content;
a processor configured to:
analyse the received audio signal to determine a current playback position of the combined video and audio content by obtaining signal characteristics of the received signal and comparing the obtained signal characteristics with a database of signal characteristics and corresponding playback times, wherein the signal characteristics are audio fingerprints, and
decrypt the alternative audio;
synchronise the alternative audio with the determined current playback position; and
an audio generator arranged to play the alternative audio synchronised with the current playback position.

9. The apparatus of claims 7 or 8, further comprising a server comprising:
a database (120) of alternative audio; and
a processor configured to receive a request for the alternative audio.

10. A computer-readable medium carrying a computer program comprising program instructions that, when executed on a computer cause the computer to perform the method of any of claims 1 to 6.

## Patentansprüche

1. Verfahren zur Bereitstellung eines alternativen Tons, der einem kombinierten Video- und Audioinhalt entspricht, wobei das Verfahren die folgenden Schritte aufweist:
Empfangen (410) eines Audiosignals, das dem kombinierten Video- und Audioinhalt zugehörig ist, wobei das Audiosignal von einem Mikrophon (180) einer Vorrichtung (100) empfangen wird, wobei ein Positionscode in dem empfangenen Audiosignal als Audio-Wasserzeichen eingebettet ist;
Analysieren (430), durch die Vorrichtung, des empfangenen Audiosignals zur Bestimmung einer aktuellen Wiedergabeposition des kombinierten Video- und Audioinhalts aus dem Positionscode;
Entschlüsseln, durch die Vorrichtung, des alternativen Tons;
Synchronisieren (440), durch die Vorrichtung, des alternativen Tons mit der bestimmten aktuellen Wiedergabeposition; und
Abspielen, durch die Vorrichtung, des alternativen Tons, der mit der aktuellen Wiedergabeposition synchronisiert ist.

2. Verfahren zur Bereitstellung eines alternativen Tons, der einem kombinierten Video- und Audioinhalt entspricht, wobei das Verfahren die folgenden Schritte aufweist:
Empfangen (510) eines Audiosignals, das dem kombinierten Video- und Audioinhalt zugehörig ist, wobei das Audiosignal von einem Mikrophon (180) einer Vorrichtung (100) empfangen wird;
Analysieren, durch die Vorrichtung, des empfangenen Audiosignals zur Bestimmung einer aktuellen Wiedergabeposition des kombinierten Video- und Audioinhalts durch Erhalt von Signalcharakteristiken des empfangenen Signals (520) und Vergleichen der erhaltenen Signalcharakteristiken mit einer Datenbank von Signalcharakteristiken und entsprechenden Wiedergabezeiten (540), wobei die Signalcharakteristiken Audio-Fingerabdrücke sind;
Entschlüsseln, durch die Vorrichtung, des alternativen Tons;
Synchronisieren (550), durch die Vorrichtung, des alternativen Tons mit der bestimmten aktuellen Wiedergabeposition; und
Abspielen, durch die Vorrichtung, des alternativen Tons, der mit der aktuellen Wiedergabeposition synchronisiert ist.

3. Verfahren nach Anspruch 1 oder Anspruch 2, wobei die Schritte des Empfangens (410, 510), Analysierens (430, 520) und Synchronisierens (440, 550) in Intervallen oder kontinuierlich wiederholt werden.

4. Verfahren nach einem der vorhergehenden Ansprüche, wobei der alternative Ton innerhalb der Vorrichtung (100) gespeichert ist.

5. Verfahren nach einem der vorhergehenden Ansprüche, wobei der alternative Ton über ein Netz auf die Vorrichtung gestreamt wird.

6. Verfahren nach einem der vorhergehenden Ansprüche, das ferner ein Identifizieren einer Mehrzahl von verfügbaren alternativen Tönen aufweist, die basierend auf dem empfangenen Audiosignal abgespielt werden.

7. Vorrichtung (100) zur Bereitstellung für einen Nutzer der Vorrichtung eines alternativen Tons, der einem kombinierten Video- und Audioinhalt entspricht, wobei die Vorrichtung Folgendes aufweist:
ein Mikrophon (180), das zum Empfangen eines Audiosignals, das dem kombinierten Video- und Audioinhalt zugehörig ist, ausgestaltet ist;
einen Prozessor, der zu Folgendem ausgestaltet ist:
Analysieren des empfangenen Audiosignals zur Extraktion eines Positionscodes, der in dem empfangenen Audiosignal als Audio-Wasserzeichen eingebettet ist, so dass eine aktuelle Wiedergabeposition des kombinierten Video- und Audioinhalts bestimmt wird, und
Entschlüsseln des alternativen Tons;
Synchronisieren des alternativen Tons mit der bestimmten aktuellen Wiedergabeposition; und
einen Tongenerator, der dazu ausgestaltet ist, den alternativen Ton abzuspielen, der mit der aktuellen Wiedergabeposition synchronisiert ist.

8. Vorrichtung (100) zur Bereitstellung für einen Nutzer der Vorrichtung eines alternativen Tons, der einem kombinierten Video- und Audioinhalt entspricht, wobei die Vorrichtung Folgendes aufweist:
ein Mikrophon (180), das zum Empfangen eines Audiosignals, das dem kombinierten Video- und Audioinhalt zugehörig ist, ausgestaltet ist;
einen Prozessor, der zu Folgendem ausgestaltet ist:
Analysieren des empfangenen Audiosignals zur Bestimmung einer aktuellen Wiedergabeposition des kombinierten Video- und Audioinhalts durch Erhalt von Signal-charakteristiken des empfangenen Signals und Vergleichen der erhaltenen Signalcharakteristiken mit einer Datenbank von Signalcharakteristiken und entsprechenden Wiedergabezeiten, wobei die Signalcharakteristiken Audio-Fingerabdrücke sind, und
Entschlüsseln des alternativen Tons;
Synchronisieren des alternativen Tons mit der bestimmten aktuellen Wiedergabeposition; und
einen Tongenerator, der dazu ausgestaltet ist, den alternativen Ton abzuspielen, der mit der aktuellen Wiedergabeposition synchronisiert ist.

9. Vorrichtung nach Anspruch 7 oder 8, die ferner einen Server aufweist, der Folgendes aufweist:
eine Datenbank (120) von alternativem Ton; und
einen Prozessor, der dazu ausgestaltet ist, eine Anfrage für den alternativen Ton zu empfangen.

10. Computerlesbares Medium, das ein Computerprogramm trägt, das Programmbefehle aufweist, die, wenn sie auf einem Computer ausgeführt werden, verursachen, dass der Computer das Verfahren nach einem der Ansprüche 1 bis 6 durchführt.

## Revendications

1. Procédé destiné à fournir un audio alternatif correspondant à un contenu vidéo et audio combiné, le procédé comprenant les étapes consistant :
à recevoir (410) un signal audio associé au contenu vidéo et audio combiné, le signal audio étant reçu par un microphone (180) d'un dispositif (100), où un code de position est intégré dans le signal audio reçu sous forme de filigrane audio ;
à analyser (430), par le biais du dispositif, le signal audio reçu pour déterminer une position de lecture actuelle du contenu vidéo et audio combiné à partir du code de position ;
à décrypter, par le biais du dispositif, l'audio alternatif ;
à synchroniser (440), par le biais du dispositif, l'audio alternatif avec la position de lecture actuelle déterminée ; et
à lire, par le biais du dispositif, l'audio alternatif synchronisé avec la position de lecture actuelle.

2. Procédé destiné à fournir un audio alternatif correspondant à un contenu vidéo et audio combiné, le procédé comprenant les étapes consistant :
à recevoir (510) un signal audio associé au contenu vidéo et audio combiné, le signal audio étant reçu par un microphone (180) d'un dispositif (100) ;
à analyser, par le biais du dispositif, le signal audio reçu pour déterminer une position de lecture actuelle du contenu vidéo et audio combiné en obtenant des caractéristiques de signal du signal reçu (520) et en comparant les caractéristiques de signal obtenues à une base de données des caractéristiques de signal et des durées de lecture (540) correspondantes, où les caractéristiques de signal sont des empreintes digitales audio ;
à décrypter, par le biais du dispositif, l'audio alternatif ;
à synchroniser (550), par le biais du dispositif, l'audio alternatif avec la position de lecture actuelle déterminée ; et
à lire, par le biais du dispositif, l'audio alternatif synchronisé avec la position de lecture actuelle.

3. Procédé selon la revendication 1 ou 2, dans lequel les étapes de réception (410, 510), d'analyse (430, 520) et de synchronisation (440, 550) sont répétées à intervalles ou en continu.

4. Procédé selon l'une des revendications précédentes, dans lequel l'audio alternatif est stocké dans le dispositif (100).

5. Procédé selon l'une des revendications précédentes, dans lequel l'audio alternatif est diffusé en continu au dispositif via un réseau.

6. Procédé selon l'une des revendications précédentes, comprenant en outre l'identification d'une pluralité d'audios alternatifs disponibles devant être lus sur la base du signal audio reçu.

7. Appareil (100) destiné à fournir à un utilisateur de l'appareil un audio alternatif correspondant à un contenu vidéo et audio combiné, l'appareil comprenant :
un microphone (180) configuré pour recevoir un signal audio associé au contenu vidéo et audio combiné ;
un processeur configuré :
pour analyser le signal audio reçu afin d'extraire un code de position intégré dans le signal audio reçu sous forme de filigrane audio de manière à déterminer une position de lecture actuelle du contenu vidéo et audio combiné, et
pour décrypter l'audio alternatif ;
pour synchroniser l'audio alternatif avec la position de lecture actuelle déterminée ; et
un générateur audio agencé pour lire l'audio alternatif synchronisé avec la position de lecture actuelle.

8. Appareil (100) destiné à fournir à un utilisateur de l'appareil un audio alternatif correspondant à un contenu vidéo et audio combiné, l'appareil comprenant :
un microphone (180) configuré pour recevoir un signal audio associé au contenu vidéo et audio combiné ;
un processeur configuré :
pour analyser le signal audio reçu afin de déterminer une position de lecture actuelle du contenu vidéo et audio combiné en obtenant des caractéristiques de signal du signal reçu et en comparant les caractéristiques de signal obtenues à une base de données des caractéristiques de signal et des durées de lecture correspondantes, où les caractéristiques de signal sont des empreintes digitales audio , et
pour décrypter l'audio alternatif ;
pour synchroniser l'audio alternatif avec la position de lecture actuelle déterminée ; et
un générateur audio agencé pour lire l'audio alternatif synchronisé avec la position de lecture actuelle.

9. Appareil de la revendication 7 ou 8, comprenant en outre un serveur comprenant :
une base de données (120) d'audio alternatif ; et
un processeur configuré pour recevoir une demande d'audio alternatif.

10. Support lisible par ordinateur portant un programme informatique comprenant des instructions de programme qui, lorsqu'elles sont exécutées sur un ordinateur, amènent l'ordinateur à mettre en oeuvre le procédé de l'une des revendications 1 à 6.
